# EUROPÄISCHE PATENTANMELDUNG

(11) **EP 1 627 895 A1**
(43) Veröffentlichungstag der Anmeldung: **22.02.2006**
(21) Anmeldenummer: 05015370.9
(22) Anmeldetag: 14.07.2005
(51) Int. Cl.: C08K 5/00

(54) **Mineralfasern enthaltende Siliconkautschukzusammensetzung**

(30) Priorität: 19.08.2004 DE 102004040265
(71) Anmelder: Wacker Chemie AG, 81737 München (DE)
(72) Erfinder: Jerschow, Peter, Dr., 84489 Burghausen (DE); Gerhardinger, Peter, 84489 Burghausen (DE)
(74) Vertreter: Fritz, Helmut

(57) **Zusammenfassung**

Gegenstand der Erfindung sind Siliconkautschukzusammensetzungen (S), die anorganischen Füllstoff (F), der ausgewählt wird aus Metalloxiden und Siliciumoxiden und Silicium-Metall-Mischoxiden und gemahlene Mineralfasern (M) enthalten.

## Beschreibung

Die Erfindung betrifft Siliconkautschukzusammensetzungen, die gemahlene Mineralfasern enthalten und Formkörper und Beschichtungen aus den Siliconkautschukzusammensetzungen.

In der US-A-6,387,518 ist gefüllter Siliconkautschuk für Sicherheitskabel beschrieben. Der Siliconkautschuk enthält Metalloxide. Die Isolierung aus dem Siliconkautschuk verbrennt im Brandfall und bildet mit dem Metalloxid eine Keramik, die elektrisch isolierend ist. Dadurch wird ein Kurzschluss zwischen den Adern des Kabels verhindert und für einen Funktionserhalt des Kabels gesorgt.

DE-A-19717645 beschreibt keramisierbare flammwidrige Zusammensetzungen, die Siliconkautschuk und keramisierende sinternde Füllstoffe enthalten.

Bestimmte Standards fordern eine erhöhte Flexibilität des Kabels im Brandfall, wodurch die Keramik zerbröckelt und der Funktionserhalt nicht gewährleistet ist.

US-A-6,387,518 erwähnt auch Glasfasern als Füllstoffe. Derartige Füllstoffe lassen sich aber nur sehr schwer in Siliconkautschuk einarbeiten und wirken sich negativ auf die elektrische Durchschlagsfestigkeit des Siliconkautschuks aus.

Gegenstand der Erfindung sind Siliconkautschukzusammensetzungen (S), die anorganischen Füllstoff (F), der ausgewählt wird aus Metalloxiden und Siliciumoxiden und Silicium-Metall-Mischoxiden und gemahlene Mineralfasern (M) enthalten.

Die Siliconkautschukzusammensetzungen (S) keramisieren bereits dann, wenn sie in unvernetztem Zustand verascht werden. Die vernetztem Siliconkautschukzusammensetzungen (S) weisen nicht nur verbesserte mechanische Eigenschaften des Siliconelastomers auf z.B. erhöhte Reissfestigkeit auf sondern zeigen auch gute elektrische Eigenschaften. Im Brandfall bildet sich durch Verbrennen des Siliconelastomers mit dem anorganischen Füllstoff (F) und den gemahlene Mineralfasern (M) eine mechanisch widerstandsfähige Keramik, die noch gut elektrisch isolierend ist. Insbesondere ist die Keramik weniger brüchig, da die Glasfasern einkeramisieren und die Keramik verfestigen, ähnlich wie dies durch Stahlarmierungen im Stahlbeton der Fall ist.

Aufgrund der Mahlung lassen sich die Mineralfasern (M) problemlos in die Siliconkautschukzusammensetzungen (S) einarbeiten.

Außerdem bewirken diese Mineralfasern (M) in den Siliconzusammensetzungen (S) eine erhöhte Beständigkeit gegenüber apolaren Medien. Unter apolaren Medien werden alle apolaren Flüssigkeiten verstanden, in denen Siliconkautschuke während des Einwirkens derselben quellen. Apolare Medien sind beispielsweise Mineralöle, wie Paraffine und verarbeitete Mineralöle, wie Kraftstoffe, z.B. Dieselöl, Kerosin, Benzin.

Durch Beschichten der Fasern mit Haftvermittlern, insbesondere Silanen, wird die erhöhte Beständigkeit gegenüber apolaren Medien noch verstärkt. Derselbe Effekt tritt ein, wenn sich im Siliconkautschuk Haftvermittler befinden.

Die Siliconkautschukzusammensetzungen (S) sind vernetzbar zu Siliconkautschuk. Beispielsweise können die Siliconkautschukzusammensetzungen (S) peroxidisch vernetzend, kondensationsvernetzend oder additionsvernetzend sein.

Als Silikonkautschuk können übliche kondensationsvernetzende Organopolysiloxane, wie in z.B EP-A-359251 beschrieben, die hiermit durch Bezugnahme eingeschlossen ist (incorperated by reference), verwendet werden oder auch bekannte additionsvernetzende oder peroxidisch vernetzende Massen.

Vorzugsweise sind die Siliconkautschukzusammensetzungen (S) peroxidisch vernetzend und enthalten vorzugsweise die folgenden Komponenten:

Organopolysiloxane (A) aus Einheiten der allgemeinen Formel I

RᵣSiO_{(4-r)/2}

worin
- **R**: gleich oder verschieden sein kann und gegebenenfalls substituierter Kohlenwasserstoffrest bedeutet und
- **r**: 0, 1, 2 oder 3 ist und einen durchschnittlichen Zahlenwert von 1,9 bis 2,1 hat.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphtyl- und Anthryl-und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Weitere Beispiele für Reste R sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest R um Wasserstoffatom und Kohlenwasserstoffreste mit 1 bis 8 Kohlenstoffatomen, besonders bevorzugt um den Methyl-, Phenyl- oder Vinylrest.

Vorzugsweise sind an mindestens 70 Mol%, insbesondere mindestens 90 Mol% der in dem Organopolysiloxan (A) enthaltenen Si-Atome Alkylreste, insbesondere Methylreste, gebunden. Enthalten die Organopolysiloxane neben Si-gebundenen Methyl- und/oder 3,3,3-Trifluorpropylresten noch Si-gebundene Vinyl- und/oder Phenylreste, so handelt es sich bei letzteren bevorzugt um Mengen von 0,001 - 30 Mol%.

Vorzugsweise bestehen die Organopolysiloxane (A) überwiegend, insbesondere zu mindestens 95 Mol% aus Diorganosiloxaneinheiten. Die Endgruppen der Organopolysiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität von 10³ bis 10⁸ mm²/s auf.

Vorzugsweise werden als Vernetzter bei den Siliconkautschukmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und 2,5-Bis-(tert.-butylperoxy)-2,5-dimethylhexan bevorzugt sind.

Des weiteren wird als Vernetzer vorzugsweise ein Gemisch aus Bis - (4 -Methylbenzoyl)-peroxid - (= PMBP) und 2,5-DimethylHexan - 2,5 - di-tertiär-butylperoxid (=DHBP) im Verhältnis 1 : 0,4 bis 0,5 : 1, bevorzugt im Verhältnis 1:0,4 verwendet.

Beispiele für Weichmacher, die als Additive eingesetzt werden können, sind mit Trimethylsilylgruppen oder Hydroxygruppen terminierte Polydimethylsiloxane mit einer Viskosität von maximal 1000 mm²/s bei 25°C oder auch Diphenylsilandiol.

Beispiele für Hitzestabilisatoren, die als Additive eingesetzt werden können, sind Übergangsmetallfettsäuresalze, wie Eisenoctoat, Übergangsmetallsilanolate, wie Eisensilanolat, sowie Cer(IV)-Verbindungen, Oxide und Hydroxide dieser Metalle, Ruße.

Der anorganische Füllstoff (F) kann verstärkend oder nichtverstärkend sein.

Beispiele für verstärkende Füllstoffe (F) sind pyrogene oder gefällte Kieselsäuren mit BET-Oberflächen von mindestens 50 m²/g.

Die genannten Kieselsäurefüllstoffe können hydrophilen Charakter haben oder nach bekannten Verfahren hydrophobiert sein. Hierzu sei beispielsweise auf US-A-5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Siliconkautschukzusammensetzungen (S), wobei diese Reagenzien vorteilhafterweise in einer geeigneten Mischvorrichtung, wie z.B. Kneter oder Innenmischer, zum bereits vorgelegten Organopolysiloxan (A) gegeben werden, bevor die hydrophile Kieselsäure sukzessive in die Masse eingearbeitet wird.

Beispiele für nichtverstärkende Füllstoffe (F) sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips, Emaille, Glasfritte, Glaslote und Tone. Die BET-Oberfläche dieser Füllstoffe (F) liegt vorzugsweise unter 50 m²/g.

Bevorzugt sind keramisierende Füllstoffe (F), die ausgewählt werden aus Magnesiumoxid, Aluminiumoxid, Zinnoxid, Calciumoxid, Titanoxid, Bariumoxid und Siliciumdioxid und Verbindungen der Metalle Magnesium, Aluminium, Zinn, Calcium, Titan und Barium und Silicium bei denen bei Erhitzung Oxide entstehen, insbesondere deren Hydroxide, Borsäure und Zinkborat.

Die Siliconkautschukzusammensetzungen (S) enthalten vorzugsweise 10 bis 80 Gew.-%, besonders bevorzugt 20 bis 60 Gew.-% anorganischen Füllstoff (F).

Vorzugsweise enthalten die keramisierenden Siliconkautschukzusammensetzungen (S) Platinverbindungen.

Der Silikonkautschuk kann bevorzugt Platinkomplexe enthalten, die zumindest eine ungesättigte Gruppe aufweisen, wie vorzugsweise Platin-Olefin-Komplexe, Platin-Aldehyd-Komplexe, Platin-Keton-Komplexe, Platin-Vinylsiloxan-Komplexe, Platin-1,3-Divinyl-1,1,3,3-tetramethyldisiloxankomplexe mit oder ohne Gehalt an nachweisbarem organischem Halogen, Platin-Norbornadien-methylacetonatkomplexe, Bis-(gammapicolin)-platindichlorid, Trimethylendipyridinplatindichlorid, Dicyclopentadienplatindichlorid, Dimethylsulfoxydethylenplatin-(II)-dichlorid, Umsetzungsprodukte von Platintetrachlorid mit Olefin und primärem Amin oder sekundärem Amin oder primärem und sekundärem Amin, Umsetzungsprodukt aus in 1-Octen gelöstem Platintetrachlorid mit sec.-Butylamin, wobei der Platin - 1,3-Divinyl-1,1,3,3-tetramethyldisiloxankomplex besonders bevorzugt ist. Dieser Platinkomplex wird in Mengen von 5 bis 200 ppm, bevorzugt 10 bis 100 ppm zugesetzt, wobei die Menge auf reines Platin bezogen ist. Es können auch Mischungen der Platinkomplexe verwendet werden.

Die gemahlenen Mineralfasern (M) sind vorzugsweise Keramik- oder Glasfasern.

Beispiele für Keramikfasern (M) sind Aluminiumoxid, Zirkonoxid, Schlackefasern, Steinwolle, Glasfasern; insbesondere Glasfasern oder Steinwolle. Für keramisierende Zusammensetzungen besitzen die Glasfasern bevorzugt einen niedrigen Gehalt an leitfähigen Ionen.

Durch die Mahlung werden die Mineralfasern (M) vorzugsweise durchschnittlich 30 bis 500 µm lang. Die gemahlenen Mineralfasern (M) weisen insbesondere eine durchschnittliche Länge von 100 bis 300 µm auf. Der durchschnittliche Durchmesser der Mineralfasern (M) beträgt vorzugsweise von 0,1 bis 20 µm.

Zur Herstellung von Kabeln werden bevorzugt alkalifreie oder alkaliarme Mineralfasern (M) eingesetzt.

Bei den jeweiligen Komponenten der Siliconkautschukzusammensetzungen (S) kann es sich jeweils um eine einzelne Art einer solchen Komponente, wie auch um ein Gemisch aus mindestens zwei verschiedenen Arten einer solchen Komponente handeln.

Ein weiterer Gegenstand der Erfindung sind Formkörper und Beschichtungen aus den Siliconkautschukzusammensetzungen (S), sowie die vernetzten Formkörper und Beschichtungen. Bevorzugte Beschichtungen sind Gewebebeschichtungen. Bevorzugte Formkörper sind beispielsweise die Isolierhülle um elektrische Leiter, Schutzhülle und Aussenmantel sowie Profile, die dem Brandschutz dienen, wie Bauprofile.

Alle Symbole der vorstehenden Formeln weisen ihre Bedeutungen jeweils unabhängig voneinander auf.

Soweit nicht anders angegeben sind alle Mengen- und Prozentangaben in den folgenden Beispielen auf das Gewicht bezogen, alle Drücke 0,10 MPa (abs.) und alle Temperaturen 20 °C.

### Beispiel 1:

Zur Erhöhung der Medienbeständigkeit, gemessen an der Volumenzunahme nach Lagerung einer 6 mm dicken Tablette mit einem Durchmesser von 10 mm 7 d in Dieselöl bei 23 °C:

| | A | B | C |
|---|---|---|---|
| | Gew. Teile | Gew. Teile | Gew. Teile |
| Siliconkautschuk | 100 | 100 | 100 |
| Glasfaser 150 µm | 0 | 10 | 25 |
| Volumenzunahme nach Lagerung | 72 % | 42% | 48 % |

### Beispiel 2:

Zur Erhöhung der Medienbeständigkeit, gemessen an der Volumenzunahme nach Lagerung einer 6 mm dicken Tablette mit einem Durchmesser von 10 mm 7 d in Dieselöl bei 23 °C:

| | A | B | C |
|---|---|---|---|
| | Gew. Teile | Gew. Teile | Gew. Teile |
| Siliconkautschuk | 100 | 100 | 100 |
| Glasfaser 230 µm | 0 | 10 | 25 |
| Volumenzunahme nach Lagerung | 72 % | 44% | 50 % |

## Patentansprüche

1. Siliconkautschukzusammensetzungen (S), die anorganischen Füllstoff (F), der ausgewählt wird aus Metalloxiden und Siliciumoxiden und Silicium-Metall-Mischoxiden und gemahlene Mineralfasern (M) enthalten.

2. Siliconkautschukzusammensetzungen (S), nach Anspruch 1, welche peroxidisch vernetzend, kondensationsvernetzend oder additionsvernetzend sind.

3. Siliconkautschukzusammensetzungen (S) nach Anspruch 1 und 2, bei denen der anorganische Füllstoff (F) ausgewählt wird aus Siliciumdioxid, Magnesiumoxid, Aluminiumoxid, Zinnoxid, Calciumoxid, Titanoxid und Bariumoxid .

4. Siliconkautschukzusammensetzungen (S) nach Anspruch 1 bis 3, bei denen die gemahlenen Mineralfasern (M) ausgewählt werden aus Keramik- und Glasfasern.

5. Siliconkautschukzusammensetzungen (S) nach Anspruch 1 bis 4, bei dem die Mineralfasern (M) durchschnittlich 30 bis 500 µm lang sind.

6. Formkörper und Beschichtungen aus den Siliconkautschukzusammensetzungen (S) gemäss Anspruch 1.
